# EUROPEAN PATENT APPLICATION

(11) **EP 1 557 577 A2**
(43) Date of publication of application: **27.07.2005**
(21) Application number: 05000366.4
(22) Date of filing: 11.01.2005
(51) Int. Cl.: F16B 37/06, F16B 33/00

(54) **A blind rivet nut**

(30) Priority: 21.01.2004 GB 0401206
(71) Applicant: Newfrey LLC, Newark, Delaware 19711 (US)
(72) Inventor: Davies, John David, Handsworth Birmingham B20 3AP (GB); Weeks, Geoffrey, Burton-upon-Trent DE15 0LJ (GB); Jones, Steven Victor, Great Barr Birmingham B43 5LN (GB)
(74) Representative: Haar, Lucas H., Dipl.-Ing.

(57) **Abstract**

The present invention relates to a blind rivet nut (10).

Blind rivet nuts (10) are used to connect items to surfaces of materials, such as roof racks to automobiles, and have proven to be extremely reliable. However, difficulties occur when attempting to connect to several layers of materials (26) or when material thickness increase, as it has been necessary to increase hole size in order to ensure hole registration and this can cause sealing problems.

The invention provides a blind rivet nut (10) capable of being used through one or several layers with improved grip capability and improved sealing ability preventing ingress of moisture.

Lines of weakness in the form of grooves (32, 34) are formed in a portion of the body (12) of the blind rivet nut (10) so that material deforms selectively thereby improving the grip of the blind rivet nut (10).

A flange has an annular recess (40) that enables an O-ring seal (18) to deform more efficiently, giving a larger 'footprint' than was previously possible thereby enhancing sealing.

## Description

The present invention relates to a blind rivet nut. More particularly the present invention relates to a blind rivet nut that has improved grip capability and an improved seal.

Blind rivet nuts are used in thin sheet applications as a means of thread reinforcement and in applications to which a secondary rivet part (bolt) is secured. In some instances these blind rivet nuts are used, for example, to connect an attachment for a rack to the roof of an automobile, where the blind rivet nut is of the so-called closed end variety.

A blind rivet nut typically has an elongate body, that is generally cylindrical or hexagonal in cross section, and hollow for the major part of its length, with one end being either closed (blind) or open. Part of the hollow portion is threaded to receive a setting tool or bolt. A flange is formed at an open end of the blind rivet nut remote from the threaded end and extends laterally therefrom. The flange extends beyond the periphery of the hollow body and has a generally flat face that abuts the surface of an outer layer or sheet of material.

Installation of the blind rivet nut commences with the blind rivet nut being threaded onto a threaded mandrel of a setting tool and together inserting the blind rivet through preformed apertures of one or more layers of sheets of materials. On initiation of the setting cycle the setting tool mandrel, still in engagement in the blind rivet nut, is pulled rearwards towards the flange of the blind rivet nut thereby causing deformation of the blind rivet nut body walls beyond the side of the workpiece remote from the operator and sandwiching the, or each sheet of material, against the face of the flange.

It is known that there are combined rivet nuts and seals. One such arrangement is the provision of a peripheral seal moulded directly to the flange of a blind rivet nut, as seen for example in published International Patent Application WO-A1-02081936 (Emhart LLC).

Published European Patent Application EP-A-0 634 582 (Etablissements Dejond) discloses a blind rivet nut having a threaded internal portion and a collar, which is shaped so as to be able to be totally protected against rust, by way of a prior electrolytic coating. EP-A-0 634 582 discloses a blind rivet nut having a flange with a recess for receiving an O-ring seal for preventing ingress of moisture.

Blind rivet nuts have proven to be an extremely successful and reliable means of connecting items to outer surfaces of materials, as well as holding a number of layers of materials together. However, it will be appreciated that whilst a considerable compressive force can be applied to the layers or sheets of material (for example once the elastic limit of the material, from which the blind rivet is formed, has been exceeded and permanent deformation of the rivet has occurred), the tolerance of blind rivet nuts to accommodate a range of workpiece thickness is relatively small. That is the actual amount of deformation, and the degree of tolerance in the amount of deformation that occurs, is relatively small.

An automobile roof often comprises a plurality of layers of different sheets of materials and accordingly there is often a requirement for a number of different lengths of blind rivet nut to be used. Each length of blind rivet nut corresponds to its location and use. For example longer length blind rivet nuts are required in positions where there are multiple layers of greater thickness of materials; whereas in other areas, where there may be a smaller number of layers, or less material; shorter blind rivet nuts are employed. This requirement for several different lengths of blind rivet nut carries with it the attendant risk that an unsuitable blind rivet nut could be used in a particular thickness of panels with the resultant risk of improper insertion or even failure. Moreover there is associated with a wide selection of blind rivet nuts, the additional cost of manufacturing, the additional cost of manufacturing tooling for a larger number of blind rivet nut lengths and the associated costs of storage, labelling and distribution.

It is an object of this invention to provide a blind rivet nut with improved grip capability and which is suitable for use with a greater range of material thickness than has heretofore been achievable.

A further object of the invention is to provide an improved seal to the flange of a blind rivet nut, for example, to prevent ingress of moisture beneath the flange of the rivet nut and along the body to the interior of the application. Further and particularly where there are several layers of material and the size of the aperture has to be enlarged, in order to ensure sufficient alignment of the holes for the rivet nut to pass through, the flange of the rivet and the associated seal has to be correspondingly large. Further it has been found that, in addition to sealing, it is beneficial to have a wide metal-to-metal contact that the large flange affords in order to give a wider load support area.

According to a first aspect of the invention there is provided a blind rivet nut for insertion into an aperture formed in one or more layers of material, comprising: an elongate body, said body being substantially hollow and having a longitudinal axis; a flange formed at a plane substantially orthogonal to said axis, said flange being adapted to receive a seal; characterised in that said body has at least one line of weakness formed therein, whereby in use, the body is deformed at or around said at least one line of weakness, thereby enhancing the grip between the blind rivet nut and the or each layer of material(s).

An advantage of the invention is that it permits blind rivet nuts to be used in situations where the thickness of the material, through which the blind rivet nut passes, varies, thus overcoming the need for a great variety of lengths of blind rivet nut.

Preferably the or each line of weakness is a groove formed in a portion of the hexagon body and is dimensioned and arranged so that material deforms more readily so as to enhance the grip capability of the blind rivet nut.

Ideally the blind rivet is a closed end blind rivet nut and the or each groove is/are machined or formed e.g. by rolling in an outer surface of its collapsible portion.

In the case of a blind rivet nut with a cylindrical body the depth of the groove is typically between 0.1 and 0.3 mm. In the case of a hexagon shape the depth of the groove of between 0.1mm and 0.05mm typically is where the wall thickness of the body is at a minimum at the across flats dimension and accordingly is deeper across the comers.

Advantageously the grooves are annular recesses formed in a plane parallel with the flange. More than one groove may be provided, in which instance, upon deformation of the body of the blind rivet nut that occurs on setting, radial expansion is exaggerated at a plurality of locations. This results in another advantage of the invention, attributable to the fact that additional lateral grip is provided by the portion(s) of the rivet nut that deform(s) when the, or each, line of weakness is defined in the portion of the rivet nut that sits within the aperture. Where there is slight play between the blind rivet nut and internal sides of the aperture, radial expansion of material forming the body of the blind rivet nut will tend to reduce this play, thereby not only gripping materials axially in a direction parallel to the axis of the blind rivet, but also laterally, so as to prevent or reduce rotation of the blind rivet in the aperture. This particular feature is considered to be a benefit when using the blind rivet nut in a plurality of layers of material.

It can be envisaged that where the blind rivet nut is employed in several layers of material, relative centres of one hole to another, can vary. In order to accommodate these differences in hole centre location, so as to ensure registration of the holes or apertures, it is common practise to increase hole or aperture sizes in the sheet metals pressings. These holes are sometimes referred to as being oversize.

The joint in a combination of layers or panels, particularly in roof construction, is required to be watertight and in order to prevent the ingress of moisture the blind rivet nut flange tends to be large so that it overlaps such oversize holes. Flanges by themselves are not watertight and some sealing capability such as an 'O-ring' seal beneath the flange or a moulded peripheral rim seal to the flange needs to be added. The dimensions of the seal groove are such that on application of the blind rivet nut, when setting occurs, the seal is compressed to the correct degree to effect a seal between the flange and the outer face if the workpiece. If the seal groove is too deep then the degree of compression will not be enough to prevent ingress of moisture.

It is also known that the pre-punched holes in the panels are of different sizes and accordingly the size and form of the panels can be considerably oversize in relation to the size of the blind rivet nut. A corollary of this is that holes formed in each sheet of material have to be oversize so as to provide a small amount of tolerance when aligning multiple layers, with the result that flanges of blind rivets have also to be considerably larger than the body of the blind rivet to ensure there is sufficient material provided by the face of the flange to abut against the peripheral regions of the aperture, as well as to accommodate a sealing ring for preventing the ingress of moisture.

As a result of the larger sized holes, relative to the flange diameter of the rivet, there has been a greater risk that blind rivet nuts can occasionally be misaligned, consequently the relatively narrow sealing band, provided by an O-ring seal for example, impinges part of a hole resulting in less efficacious sealing or damage in the seal.

It is a further attribute of the larger flange of the blind rivet nut that the load being applied by the secondary component bolted to the blind rivet nut is transmitted to the workpiece and it is readily appreciated that the larger flange diameter provides a wider bearing area to support such a load especially if there is metal to metal contact i.e. there is minimum compression of the seal.

According to a second aspect of the invention there is provided a blind rivet nut, comprising: an elongate body, said body being substantially hollow and having a longitudinal axis; a flange formed at a first end of said body, the flange having a first portion removed, defining a recess for receiving a seal; characterised in that a second portion is removed from said flange, whereby in use, the seal is permitted to deform laterally from the first portion so as to form a seal in the second portion. Since the seal is allowed to deform laterally to fill the gap between thee workpiece and the second portion thus preventing the ingress of moisture this allows the face of the underside of the flange to press against the workpiece thus giving a metal-to-metal contact.

Preferably the second portion is an annular recess machined at a peripheral region of the flange so as to accommodate the seal thereby forming a water ingress resistant seal in the vicinity of the circumference of the flange.

It will be appreciated that the two aspects of the invention may be combined so as to provide a blind rivet nut with grooves for enhancing the grip capability of the blind rivet nut and also the provision of a seal for preventing ingress of moisture into the holes and between sheets of materials and also providing a larger area to support the applied loads by virtue of the larger flange. Such a blind rivet is considered to be particularly well suited for use in either single or multiple layers of material.

Preferred embodiments of the invention will now be described, by way of exemplary examples only, and with reference to the following Figures in which:
Figure 1 is a side elevation of a blind rivet nut;
Figures 1A to 1C show diagrammatically progressive deformation of an O-ring seal;
Figure 2 is an above plan view of Figure 1;
Figure 3 is a part sectional view along line A-A of Figure 2;
Figures 3A to 3C are part sectional views of different blind rivet nuts, showing alternative embodiments of grooves, namely semicircular, square and rectangular respectively;
Figure 4 shows a part sectional view of upper portion of the blind rivet nut of Figure 1 and shows a recessed flange;
Figure 5 is a part sectional view of the blind rivet nut in a single sheet of material;
Figure 5A is an exploded part sectional view of Figure 5 showing deformation of the O-ring seal; and
Figure 6 is a part sectional view of the blind rivet nut in several sheets of material or a thicker sheet of material.

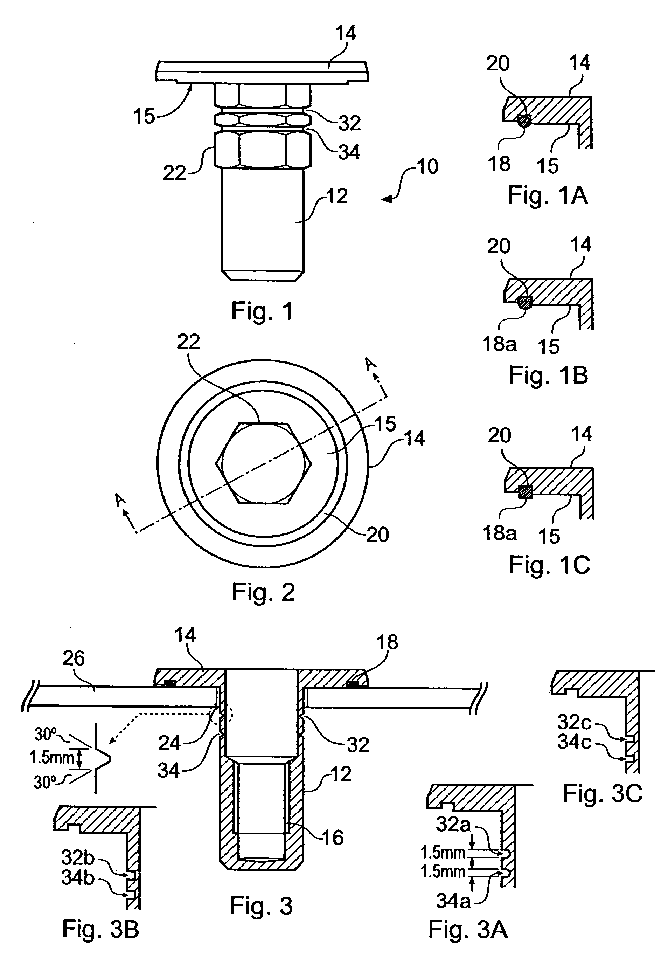

Referring to the Figures there is shown a blind rivet nut 10 having a body 12 and a flange 14. Blind rivet nut 10 has an internally threaded portion 16 and is in the form of a fully machined, standard closed end blind rivet nut with a hexagon form 22 along the portion of the shank of the blind rivet nut which abuts the underside face 15 of flange 14. Formed or machined in face 15 is an annular recess 20 which forms a location for the seal 18 as shown in Figure 1A. Alternative forms of seal are in Figures 1B showing hemispherical shape 18a and 1C showing a square seal 18b.

The hexagon form 22 of the blind rivet nut 10 is shaped so as to enter corresponding hexagon shaped holes or apertures 24 in work piece panel 26 and on setting, provides resistance to a torque applied orthogonal to the longitudinal axis of the blind rivet nut 10, for example on application of a securing bolt (not shown).

Figures 1, 3, 3A, 5 and 6 show two grooves 32 and 34, although there can be as little as one or more than two, in the hexagon portion 22 of the body 12. These grooves 32 and 34 are circumferential and are formed about the longitudinal axis of the blind rivet nut 10. The grooves 32 and 34 are shown as 'v' shape sections in Figure 3A where the groove progressively narrows towards its smaller diameter. This shape is readily achievable using conventional machining or rolling operations.

The section of the grooves may vary. For instance as shown in Figure 3 the grooves are 'v' shaped with a 60 degrees inclusive angle and 1.5mm wide at the widest point. Other variants are shown in Figures 3A, 3B and 3C showing semicircular, square and rectangular shapes respectively. The purpose of the groves 32 and 34 is to provide a section whereby the blind rivet nut under an axial setting load will collapse preferentially to shorten the body of the rivet nut followed by expansion of the intermediate sections of the blind rivet body, thereby ensuring a better grip range is achieved.

The cross sectional shape of the grooves 32 and 34 could be rectangular, where the depth of the groove is greater than its width, or square, where the width is greater than its depth. The purpose of the grooves 32 and 34 is to provide a stress concentration when setting (inserting) the blind rivet nut 10 and therefore promote prompt, controlled and predictable material deformation, thereby ensuring a better grip is achieved between the blind rivet nut 10 and the sheet(s) of material 26 in which it is set. As material making up the body 12 of the blind rivet nut 10 deforms, under axial loading of the setting tool (not shown), there is deformation of the material in one or both grooves 32 and 34 depending upon the thickness of the material 26.

Although there are two grooves shown, the number of grooves may be more and increased to accommodate a greater variation of work piece thickness. This technique of grooving the body 12 of blind rivet nut 10 may also be applied to non-hexagon or circular rivet bodies. The position and the spacing of the grooves, along the body 12 of the blind rivet 10, is to suit a particular application but each dimension can be varied for particular applications. Typically, this preferred embodiment of the blind rivet nut 10 has a grip range of 2mm, whereas that of a conventional blind rivet nut is typically approximately 1mm.

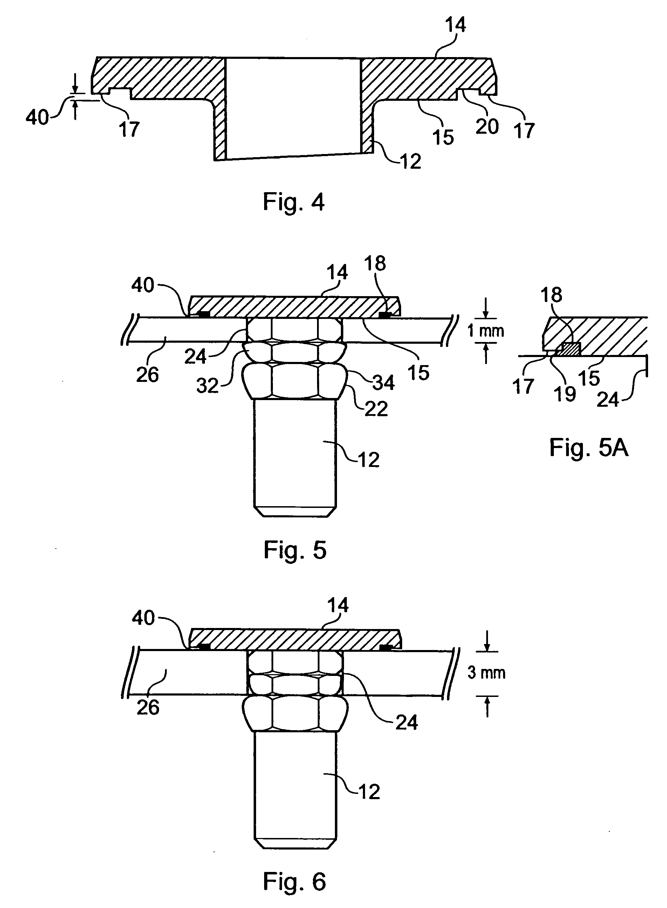

Figure 4 shows an upper part of the blind rivet nut 10 and depicts in detail the flange 14 that is considerably larger than normal. For instance for the diameter of the flange 14 can be 20 mm to 30 mm but is ideally around 23mm in diameter instead of the standard 13 mm diameter. The underside of the flange 14 is divided into two areas; one being the angular area defined by the face 15 that extends from the abutment of the body 22 to the inner diameter of the recess 20 and the other being the annular area 17 defined between the outer diameter of the recess 20 and the outer diameter of the flange 14 but of a different thickness that is defined by the gap 40. The purpose of the gap 40 is to allow the seal 18 when under compression to extrude through the gap 40 when the recess 20 has been filed and thus allows both sealing and a metal to metal contact of the face 15 against the workpiece material as shown in Figure 5A.

The O-ring seal 18 is made form a rubber-like material such as Neoprene (Trade Mark) or a similar elastomeric material. The shape of the seal can be a circular cross-section such as an O-ring or even flat, providing the material protrudes beyond the recess 40, above the face of the underside surface of the flange 40 sufficiently to form a water ingress resistant seal between the flange 40 and the work piece 26.

The method of insertion (setting) the blind rivet nut 10 will now be described briefly, in order to assist further in the understanding of the invention.

Blind rivet nut 10 is threaded onto a mandrel of a setting tool (not shown) and pushed into the or each hole 24 formed in one or more work pieces 26. It is then set in the conventional manner by supporting the flange 14 of the blind rivet nut on the nosepiece of the setting tool (not shown) and drawing the mandrel and the co-operating thread portion 16 of the blind rivet nut towards the blind side of the workpiece 26. In this process the portion of the body 12 of the blind rivet nut 10 adjacent the threaded portion 16 collapses to form a radially enlarged region on the opposite side of the material or work piece 26 from flange 14. The radial expansion of the body of the blind rivet nut also occurs within the holes 24 of the workpiece 26 thus promoting hole filling and increase joint integrity. There is sufficient force applied during the setting operation to permanently deform a part of the rivet nut so as to grip underside of the work piece 26 thereby providing intimate face-to-face contact occurs. Typical settings are shown giving settings in maximum and minimum grip thickness.

It can be appreciated if there were more than two grooves in the body of the blind rivet nut and in setting minimum sheet thickness, there would be more than one radial setting bulge being shown.

The invention has been described by way of example only and it will be appreciated that variation may be made to the embodiments described without departing from the scope of the invention.

## Claims

1. A blind rivet nut (10) for insertion into an aperture (24) formed in one or more layers of material (26), comprising: an elongate body (12), said body (12) being substantially hollow and having a longitudinal axis; a flange (14) formed at a plane substantially orthogonal to said axis, **characterised in that** said body (12) has at least one line of weakness (32, 34) formed therein, whereby in use, the body (12) is deformed at or around said at least one line of weakness (32,34), thereby enhancing the grip between the blind rivet nut (10) and the or each layer of material (26).

2. A blind rivet nut (10) according to claim 1 further **characterised in that**, said flange (14) is adapted to receive a seal (18).

3. A blind rivet nut (10) according to claim 1 or 2 further **characterised in that** the, or each, line of weakness (32, 34) is in the form of a groove formed in the body of the nut (10).

4. A blind rivet nut (10) according to claim 3 further **characterised in that** the, or each, groove (32, 34) is formed in an hexagonal portion (22) of the body (12) of the blind rivet nut (10).

5. A blind rivet nut according to any of claims 3 or 4 further **characterised in that** the groove is v-shaped.

6. A blind rivet nut according to claim 5 further **characterised in that** the angle at which the v-shaped groove is cut is greater than 40° and less than 80° and is preferably substantially 60°.

7. A blind rivet nut according to claim 3 further **characterised in that** the blind rivet nut body has a U-shaped groove formed therein.

8. A blind rivet nut according to claim 1 further **characterised in that** the, or each, line of weakness (32, 34) is in the form of a channel formed in the body (12) of the nut (10).

9. A blind rivet nut according to claim 1 further **characterised in that** the blind rivet nut body has a plurality of grooves formed therein.

10. A blind rivet nut according to claim 1 further **characterised in that** the blind rivet nut body is in the form of a cylinder.

11. A blind rivet nut (10), comprising: an elongate body (12), said body (12) being substantially hollow and having a longitudinal axis; a flange (14) formed at a first end of said body (12), the flange (14) having a first portion removed defining a recess (20) for receiving a seal (18); **characterised in that** a second portion (40) is removed from said flange (14), whereby in use, the seal (18) is permitted to deform laterally from the first portion (20) so as to form a seal in the second portion (40) thereby creating a larger sealing surface.

12. A blind rivet nut (10) according to claim 11 further **characterised in that** the second portion (40) is an annular recess formed at a peripheral region of the flange (14) so as to accommodate the seal (18), thereby forming a seal extending to the vicinity of the circumference of the flange (14).

13. A blind rivet nut (10) according to claim 11 further **characterised in that** the seal (18) is moulded around the rim of the flange (14).

14. A blind rivet nut (10) having a flange (14) and a body (12) the ratio of the diameter of the flange (14) to the length of the body (12) being greater than 0.75, preferably greater than 0.85.

15. A plurality of panels (26) held together with the blind rivet nut (10) according to any of claims 1 to 14.
